Europäisches Patentamt

European Patent Office

Office européen des brevets

(19)

(11) Numéro de publication : **0 168 278**
**B1**

## (12) FASCICULE DE BREVET EUROPÉEN

(45) Date de publication du fascicule du brevet :
**17.08.88**

(21) Numéro de dépôt : **85401059.2**

(22) Date de dépôt : **29.05.85**

(51) Int. Cl.⁴ : **G 02 B   6/44**

(54) **Installation pour la pose de fibres optiques dans un jonc reinuré asservie à la vitesse de défilement du jonc.**

(30) Priorité : **30.05.84 FR 8408532**

(43) Date de publication de la demande :
**15.01.86 Bulletin 86/03**

(45) Mention de la délivrance du brevet :
**17.08.88 Bulletin 88/33**

(84) Etats contractants désignés :
**BE CH DE GB IT LI NL SE**

(56) Documents cités :
**FR-A- 2 458 086**
**GB-A- 2 121 209**

(73) Titulaire : **SOCIETE ANONYME DE TELECOMMUNI-CATIONS**
**41, rue Cantagrel**
**F-75624 Paris Cedex 13 (FR)**

**SOCIETE INDUSTRIELLE DE LIAISONS ELECTRI-QUES - SILEC**
**64bis, rue de Monceau**
**F-75008 Paris (FR)**

(72) Inventeur : **Missout, Bernard M.**
**41, rue Cantagrel**
**F-75631 Paris Cedex 13 (FR)**
Inventeur : **Michaux, Jean-Pierre**
**41, rue Cantagrel**
**F-75631 Paris Cedex 13 (FR)**
Inventeur : **Piova, Jean-Luc**
**41, rue Cantagrel**
**F-75631 Paris Cedex 13 (FR)**

(74) Mandataire : **Martinet & Lapoux**
**62, rue des Mathurins**
**F-75008 Paris (FR)**

EP 0 168 278 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une installation pour la pose de fibres optiques dans des rainures d'un jonc entraîné en translation à vitesse constante le long d'un axe de défilement dans une ligne de câblage à fiches optiques. Cette installation est conforme au préambule de la revendication 1. Dans une telle installation, l'asservissement de la rotation des moyens d'alimentation en fibres optiques, tels qu'un support tournant de bobines débitrices de fibres optiques, est fonction du pas variable des rainures hélicoïdales du jonc tiré dans la ligne de câblage. Les fibres optiques sont déroulées à partir des bobines et traversent des guides-fibre dans les moyens de distribution tournants pour être introduites dans les rainures du jonc. Puis le jonc pénètre dans une rubaneuse fournissant une gaine de protection maintenant les fibres dans les rainures.

Plus particulièrement, l'invention a trait au système pour asservir la vitesse de rotation des moyens d'alimentation en fibres optiques à la vitesse de rotation apparente des rainures hélicoïdales du jonc entraîné en translation à vitesse constante par les premiers moyens moteurs le long de la ligne de câblage à fibres optiques. Ce système d'asservissement est destiné à tenir compte des variations du pas des rainures hélicoïdales du jonc dues à la fabrication du jonc par extrusion. Si les moyens d'alimentation en fibres et les moyens de distribution de fibres ne tournent pas autour du jonc avec une vitesse de rotation s'adaptant aux variations du pas des rainures, le jonc est soumis à une torsion indésirable qui peut causer sa détérioration.

Des systèmes d'asservissement connus de ce type résolvant partiellement ce problème sont décrits succinctement dans le certificat d'addition français FR-B-2 458 086 et la demande de brevet français FR-A-2 527 830 correspondant à GB-A-2 121 209. Dans ces systèmes, la rotation des moyens d'alimentation en fibres est asservie par la rotation des moyens de distribution de fibres. Les moyens de distribution comprennent des guides-fibre engagés respectivement dans les rainures du jonc et tournent précisément à une vitesse de rotation égale à la vitesse de rotation apparente des rainures du jonc translaté.

Selon le FR-B-2 458 086, des moyens électromécaniques sont prévus sous la forme d'un curseur solidaire des moyens de distribution de fibres coopérant avec un anneau conducteur fendu solidaire des moyens d'alimentation. Les moyens électromécaniques permettent de déterminer la vitesse de rotation relative et la position angulaire relative des moyens d'alimentation par rapport aux moyens de distribution en vue de commander les seconds moyens moteurs entraînant en rotation les moyens d'alimentation en fibres.

Selon la FR-A-2 527 830, des moyens déterminant les vitesse et position angulaire relatives des moyens d'alimentation par rapport aux moyens de distribution sont sous la forme de deux plaques circulaires minces à trous respectivement solidaires des moyens d'alimentation et des moyens de distribution et traversant deux cellules photoélectriques fixes. Les cellules photoélectriques transmettent des signaux électriques impulsionnels qui sont comparés dans un comparateur pour commander les seconds moyens moteurs entraînant en rotation les moyens d'alimentation en fibres.

Dans ces systèmes d'asservissement connus, les moyens de distribution ne sont pas liés rigidement aux moyens d'alimentation et sont découplés en rotation par des roulements à billes ou à aiguilles, ce qui soumet encore les fibres optiques déroulées à des tensions et tractions lorsque les vitesses de rotation de ces moyens sont inégales. Cette inégalité relative subsiste chaque fois que le pas du jonc varie avant d'atteindre une valeur constante mais aussi lorsque le tracé des rainures sur la longueur d'un pas n'est pas parfaitement hélicoïdal.

En outre, les premiers moyens moteurs pour tirer le jonc le long de la ligne de câblage sont complètement séparés et indépendants des seconds moyens moteurs destinés à la rotation des moyens d'alimentation en fibres. A la mise en marche de la ligne de câblage, un déphasage important entre la vitesse de rotation apparente des rainures hélicoïdales du jonc et la vitesse de rotation des moyens d'alimentation subsiste pendant une durée relativement longue jusqu'à ce que le déphasage relatif des vitesses soit petit. L'asservissement ne remplit pas sa fonction à vitesse lente.

Par ailleurs, les moyens de distribution de fibres propres à réguler la vitesse de rotation des moyens d'alimentation en fibres sont disposés en aval des moyens d'alimentation suivant le sens de défilement du jonc. La correction de la vitesse de rotation des moyens d'alimentation s'effectue donc avec un retard par rapport aux variations du pas des rainures, ce qui est également la cause de contraintes dans les fibres.

La présente invention a pour but de fournir un système d'asservissement tel que défini dans l'entrée en matière, remédiant aux inconvénients évoqués ci-dessus.

A cette fin, une installation pour la pose de fibres optiques dans un jonc rainuré selon l'invention est telle que définie dans la revendication 1.

Les caractéristiques énoncées dans la partie caractérisante de la revendication 1, confèrent essentiellement les avantages suivants.

La liaison mécanique entre les premiers et seconds moyens moteurs permet de maintenir l'asservissement à vitesse lente, notamment au démarrage de la ligne de câblage. Le moteur correcteur à courant continu et à vitesse variable commande le différentiel en fonction des variations continues du pas des rainures du jonc, et donc de la vitesse de rotation apparente des rainures du jonc, et asservit la vitesse des moyens d'alimentation même pour une vitesse de défilement du jonc relativement petite.

Selon l'invention, les moyens d'alimentation en fibres et les moyens de distribution de fibres sont liés rigidement entre eux et tournent donc ensemble à la vitesse asservie. Les problèmes de contraintes des fibres entre des bobines débitrices et des guides-fibre sont donc résolus.

Les moyens de détection pour détecter continûment la différence entre ladite vitesse de rotation asservie des moyens d'alimentation et de distribution et ladite vitesse de rotation apparente des rainures du jonc sont disposés en amont des moyens d'alimentation en fibres suivant le sens de défilement du jonc et sont complètement séparés des moyens de distribution de fibres. les moyens de détection influent sur la vitesse de rotation de l'arbre mené dans le différentiel entraînant en rotation les moyens d'alimentation et de distribution de fibres, en additionnant un complément de vitesse dépendant de la variation du pas des rainures. Cette addition est continuelle quelle que soit la vitesse de défilement du jonc.

Selon d'autres caractéristiques de l'invention, les moyens de détection peuvent comprendre des moyens stationnaires en translation et entraînés en rotation par les rainures du jonc, des moyens liés en rotation aux moyens d'alimentation en fibres optiques et translatables parallèlement au jonc par lesdits moyens entraînés en rotation par les rainures, et des moyens électromécaniques pour détecter la translation des moyens translatables afin de produire ladite variation de tension, et de préférence des moyens pour mesurer ladite variation de tension.

D'autres avantages et caractéristiques de l'invention apparaîtront plus clairement à la lecture de la description suivante en référence aux dessins annexés correspondants dans lesquels :

— la Fig. 1 est une vue longitudinale schématique d'une ligne de câblage de fibres optiques dans un jonc rainuré ;

— la Fig. 2 est une vue en perspective d'un tronçon d'un jonc à rainures hélicoïdales ;

— la Fig. 3 est une vue schématique d'une installation pour la pose de fibres optiques selon l'invention inclue dans la ligne de câblage et comprenant un système d'asservissement de la vitesse de rotation d'un dispositif d'alimentation et de distribution de fibres ;

— la Fig. 4 est un bloc-diagramme schématique de l'installation de pose de fibres dans laquelle des simples lignes de connexion et des doubles lignes de connexion entre différents blocs représentent des liaisons électriques et des liaisons mécaniques respectivement ; et

— la Fig. 5 est une vue schématique en coupe axiale d'un dispositif de détection de différence de vitesses.

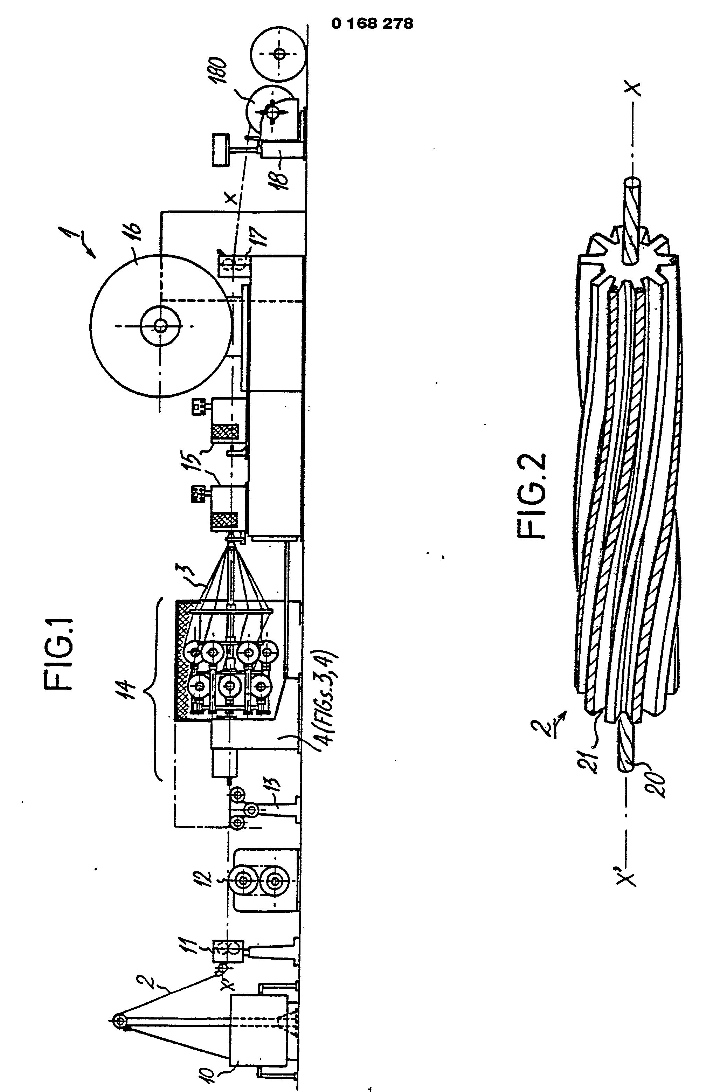

En référence à la Fig. 1, une ligne de câblage à fibres optiques 1 comprend en amont un dérouleur 10, en forme de fût vertical, qui déroule un jonc cylindrique rainuré 2 en une matière thermoplastique extrudée. Selon la réalisation illustrée à la Fig. 2, le jonc 2 contient une armature centrale 20 telle qu'un fil d'acier ou plusieurs fils d'acier torsadés, et comporte N = 10 rainures hélicoïdales parallèles 21, équiréparties à la périphérie du jonc et propres à recevoir chacune au moins une fibre optique 3. La section transversale des rainures peut être en vé, semi-circulaire, trapézoïdale ou carrée par exemple. Les rainures suivent des tracés hélicoïdaux continus parallèles ayant un pas p grand par rapport au diamètre du jonc, typiquement dans un rapport de l'ordre de 10 à 60.

Le jonc 2 sortant du dérouleur 10 est déroulé entre des roues de tension 11 et passe sur une roue de freinage 12. Le jonc 2 est tiré linéairement et soumis à un effort de traction le long d'un axe horizontal X'X longitudinal à la ligne de câblage depuis la roue de freinage 12 jusqu'à des moyens de tirage, tels qu'une roue de tirage 16 selon la réalisation illustrée ou une paire de chenilles. Entre la roue de freinage 12 en amont de la ligne et la roue de tirage 16 en aval de la ligne, le jonc 2 traverse une installation pour la pose de fibres optiques 3 dans les rainures hélicoïdales 21 du jonc 2 qui comprend successivement, un dispositif de mesure de la tension du jonc 13, un dispositif d'alimentation et de distribution de fibres optiques tournant 14 ayant une vitesse de rotation $\Omega$ asservie à la vitesse de translation v du jonc, et plus précisément à la vitesse de rotation apparente des rainures du jonc $\Omega' = v/p$ égale au nombre de pas des rainures hélicoïdales du jonc par seconde, et une ou des rubaneuses 15 pour entourer le jonc contenant les fibres par une ou des gaines de protection par exemple en terphane. Le jonc enrubanné est enroulé plusieurs fois autour de la roue de tirage 16 qui est sous la forme d'un grand disque tangent à l'axe X'X et tournant autour d'un axe de rotation horizontal orthogonal à l'axe X'X. Puis le jonc 2 passe entre des roues de contre-tension 17 et est enroulé autour d'une bobine 180 dans un dispositif enrouleur 18 en sortie de la ligne de câblage 1.

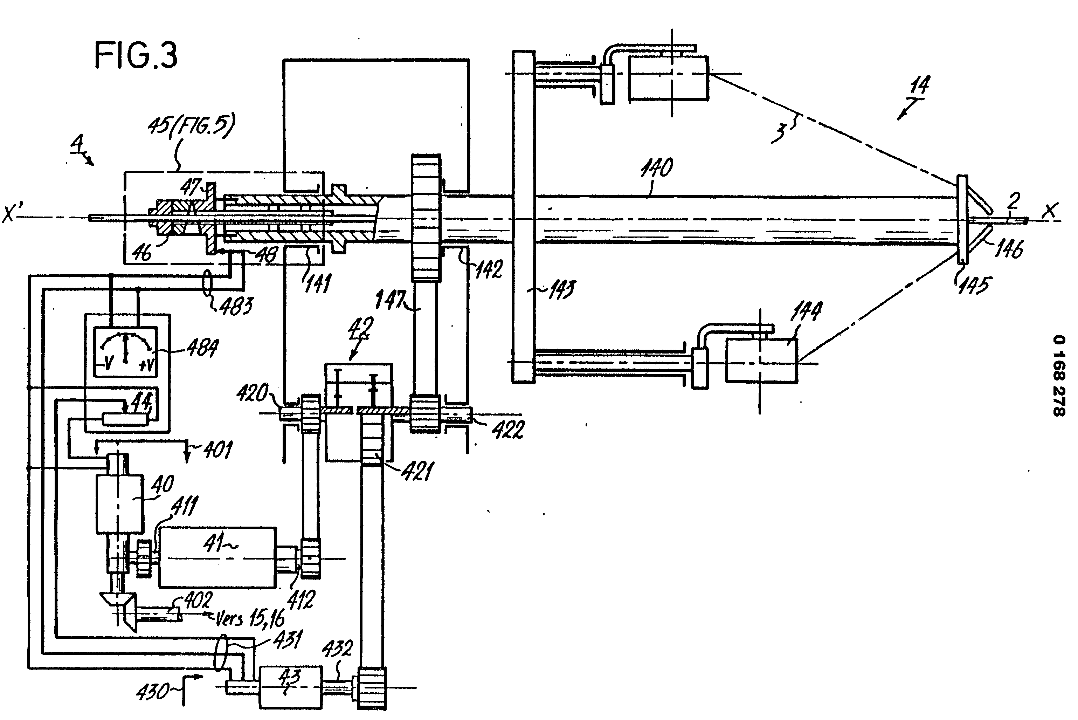

Comme montré à la Fig. 3, le dispositif d'alimentation et de distribution de fibres optiques 14 comprend un tube 140 traversé coaxialement et librement par le jonc 2. Le tube 140 est monté à rotation dans des paliers arrière 141 et avant 142 du genre double roulement à billes logé dans un bâti fixe. Un plateau 143 orthogonal à l'axe X'X supportant au moins N bobines débitrices de fibres 144, et un support 145 de N guides-fibre 146 sont liés rigidement au tube 140 devant le palier 142 et à une extrémité avant du tube 140 respectivement. Les fibres optiques 3 sont déroulées des bobines 144 et traversent les guides-fibre 146 pour être introduites dans les rainures 21 du jonc 2. Les guides-fibre 146 sont disposés suivant des génératrices d'un cône coaxial à l'axe X'X et ont des extrémités avant engrenant dans les rainures du jonc respectivement.

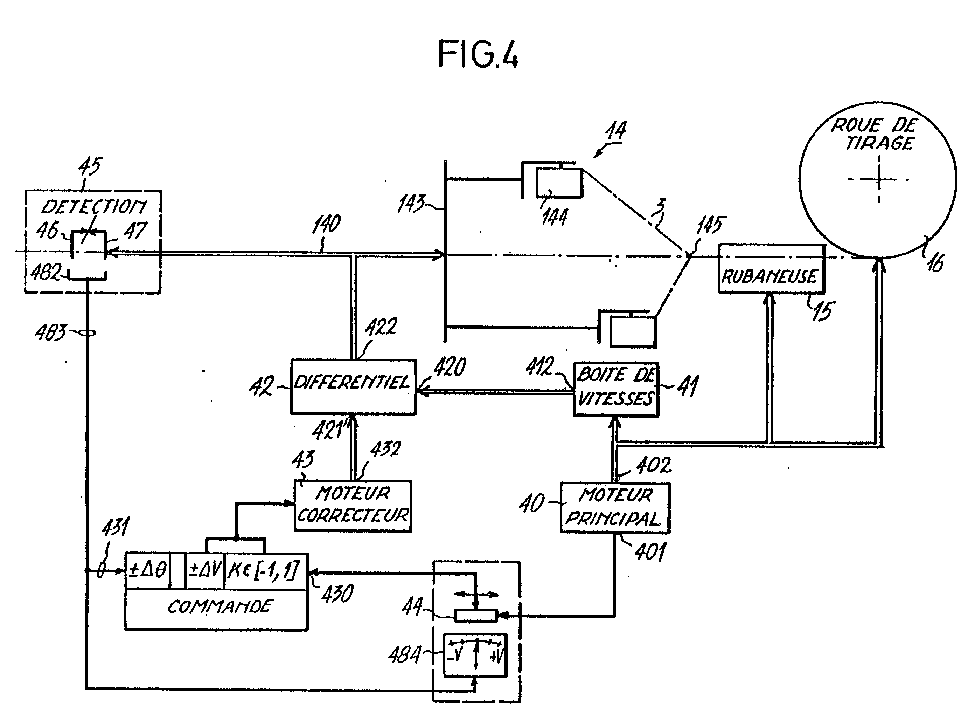

Des moyens moteurs coopérant avec un système d'asservissement, désignés par le repère général 4 et inclus dans l'installation de pose, selon l'invention sont maintenant décrits en référence aux Figs. 3 et 4.

Un moteur principal à courant continu 40 constituant des premiers moyens moteurs de l'installation entraîne par l'intermédiaire d'engrenage à chaîne et de variateurs de vitesse 402 des dispositifs servant au rubanage du jonc dans la rubaneuse 15 et les moyens de tirage du jonc tels que la roue 16. Selon la réalisation illustrée, la roue de tirage 16 translate le jonc 2 le long de l'axe X'X à la vitesse constante prédéterminée v.

Le moteur principal 40 entraîne également le dispositif d'alimentation et de distribution de fibres 14 par l'intermédiaire de seconds moyens moteurs incluant une boîte de vitesses 41, par exemple à M = 6 rapports, et un différentiel 42. Le différentiel 42 possède deux entrées constituées respectivement par un arbre moteur 420 couplé par un engrenage à chaîne à un arbre secondaire 412 de la boîte de vitesses 41, et par un arbre de commande 421 couplé par un engrenage à chaîne à un arbre moteur 432 d'un moteur correcteur à courant continu et à vitesse variable 43. La vitesse de rotation d'un arbre mené 422 du différentiel 42 est égale à la vitesse de rotation de l'arbre moteur 420 pondérée par une fraction de la vitesse de rotation variable de l'arbre moteur 432 du moteur correcteur 43. Le tube 140 lié rigidement au plateau de bobines 143 et au support de guides-fibre 145 est entraîné en rotation par un engrenage à chaîne 147 disposé entre les paliers 141 et 142 et couplant l'arbre mené 422 du différentiel 42 au tube 140.

Le moteur correcteur 43 est destiné à modifier la vitesse de rotation $\Omega$ du tube 140 en fonction de variations $\pm \Delta p$ du pas p des rainures hélicoïdales du jonc, pour un rapport de vitesse donné par la boîte de vitesses 41. Le moteur correcteur possède deux entrées de commande électrique 430 et 431.

La première entrée 430 est reliée (cf. Fig. 4) à une sortie 401 d'une dynamo tachymétrique du moteur principal 40 à travers un potentiomètre 44. Le potentiomètre 44 délivre une tension proportionnelle à une fraction K de la vitesse de rotation du moteur principal, où K est compris entre — 1 et + 1. La tension à l'entrée 430 est sélectionnée manuellement au moyen du potentiomètre 44 afin que la vitesse de rotation $\Omega$ du tube 140 soit précisément égale à la vitesse de rotation apparente nominale $\Omega'_{nom}$ comprise entre deux rapports de vitesse de la boîte de vitesses 41, à des rapports de vitesse des engrenages intermédiaires près, pour un pas nominal $P_{nom}$ des rainures 21 du jonc 2. La boîte de vitesses 41 utilisée seule, sans le moteur correcteur 43, ne permet de câbler que M joncs ayant des pas différents proportionnels aux M rapports de vitesse. L'utilisation du moteur correcteur 43 permet une variation continue de la rotation du tube 140 et donc le câblage de tout jonc quel que soit le pas de celui-ci.

Des secondes entrées 431 sont reliées à un dispositif de détection de différence de vitesse 45 et, plus généralement, de la variation du pas p des rainures 21 du jonc en vue d'asservir précisément la vitesse de rotation $\Omega$ du tube 140 à la vitesse de rotation apparente des rainures $\Omega'$.

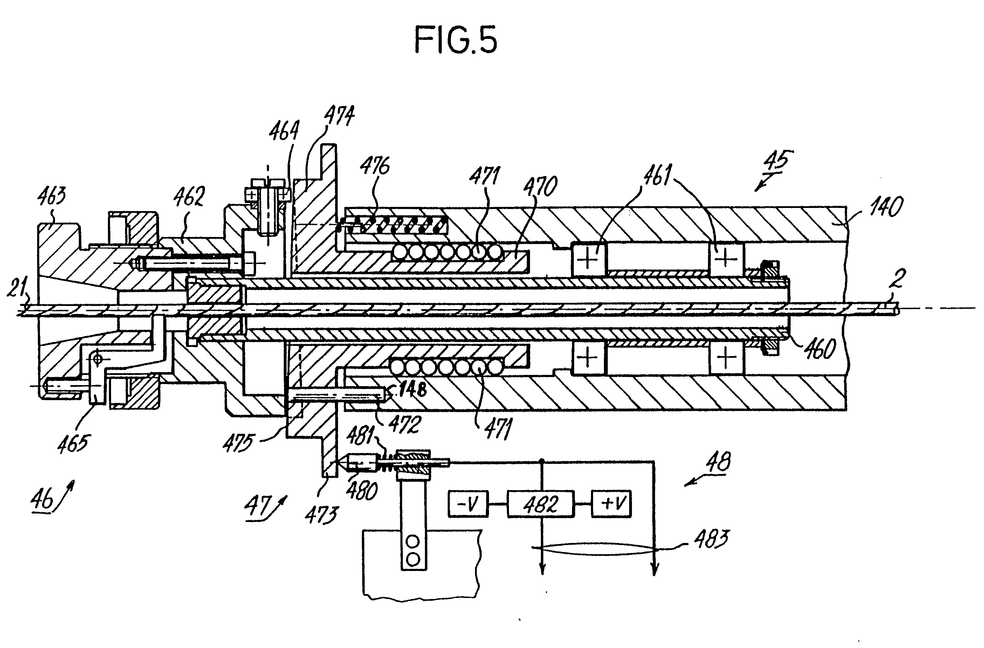

En référence à la Fig. 5, le dispositif de détection de différence de vitesses 45 est disposé à une extrémité arrière du tube 140 et est traversé axialement par le jonc 2. Le dispositif 45 comprend essentiellement un premier ensemble cylindrique de pièces 46 entourant immédiatement le jonc 2 et entraîné en rotation par les rainures du jonc, et un second ensemble cylindrique de pièces 47 entourant en partie le premier ensemble 46, entouré en partie par l'extrémité arrière du tube 140, lié en rotation au tube 140 et translatable coaxialement à l'axe X'X.

Le premier ensemble de pièces 46 comporte un fourreau 460 entourant le jonc 2 à l'intérieur du tube 140 et lié en translation au tube 140 par l'intermédiaire de deux roulements à billes 461. A une extrémité arrière du fourreau 460 en amont du tube 140 sont fixées deux bagues 462 et 463. La bague 462 est disposée entre le fourreau 460 et la bague 463 et supporte un galet 464 tournant librement autour d'un axe radial et propre à décrire un cercle coaxial au jonc 2. La bague 463 est disposée à l'extrémité arrière du premier ensemble 46 et comporte au moins un doigt radial 465 engageable dans l'une des rainures 21 du jonc 2. En pratique, trois ou quatre doigts équirépartis ciculairement sont prévus pour être engagés dans des rainures correspondantes du jonc. Des moyens connus sont prévus pour rétracter les doigts 465 des rainures du jonc et les maintenir suffisamment écartés pour introduire librement le jonc le long de l'axe X'X avant toute opération de câblage. Chaque doigt 465 présente une extrémité dirigée vers l'axe X'X qui est effilée et qui a une section radiale complémentaire de la section transversale d'une rainure 21 du jonc.

Le second ensemble de pièces 47 comporte un manchon 470 entourant librement une portion du fourreau 460 derrière les roulements 461. Le manchon 470 est guidé en translation au moyen de deux douilles à billes 471 emmanchées dans l'extrémité arrière du tube 140. Le manchon 470 est entraîné en rotation autour de l'axe X'X par le tube 140 au moyen de doigts d'entraînement longitudinaux 472 fixés à un collet arrière 473 du manchon 470 et coulissant dans des trous borgnes 148 pratiqués dans le bord arrière du tube 140. Une rondelle formant came 474 est fixée à l'arrière du manchon 470 et présente une face arrière curviligne 475 formée par une spire creuse d'une hélice ayant un pas de quelques millimètres et contrée autour de l'axe X'X. Le manchon 470 est poussé en permanence vers la bague 462 au moyen d'un ressort de compression longitudinal 476 logé dans l'arrière du tube 140 afin que le galet 464 soit constamment en contact avec la surface active spiralée 475 de la came 474.

De la description précédente, il apparaît que le premier ensemble 46 est stationnaire en translation et tourne autour de l'axe X'X à la vitesse de rotation $\Omega' = v/p$ représentative de la rotation apparente des rainures du jonc 2 grâce aux doigts 465 engagés dans des rainures 21 du jonc, et que le second ensemble 47 tourne autour de l'axe X'X à la vitesse de rotation $\Omega$ du tube 140 et est translaté par le galet 464 lorsque les vitesses $\Omega$ et $\Omega'$ sont momentanément différentes suite à une variation de pas des rainures du jonc. La translation de la came 474 est captée par des moyens électromécaniques 48 pour commander la vitesse de rotation du moteur correcteur 43. Les moyens 48 comprennent une tige 480 coulissante dans le bâti parallèlement à l'axe X'X et appliquée contre le collet 473 du manchon 470 par un ressort 481, ainsi qu'un diviseur de tension comprenant un potentiomètre 482 connecté entre deux bornes portées à des tensions opposées + V et — V symétriques par rapport à une tension de référence égale à 0 Volt. La tige 480 est liée à un curseur du potentiomètre 482. Des bornes de sortie 483 du potentiomètre 482 sont reliées aux secondes entrées de commande électrique 431 du moteur correcteur 43 et aux bornes d'un vumètre 484 tel qu'un voltmètre.

Comme déjà dit, pour un jonc 2 avec des rainures 21 ayant un pas nominal $P_{nom}$, la vitesse de rotation du dispositif d'alimentation · et de distribution de fibres 14 est réglée à la vitesse nominale $\Omega'_{nom} = v/p_{nom}$ en choisissant d'abord un rapport de la boîte de vitesses 41 qui confère une vitesse de rotation du dispositif 14 la plus proche de $\Omega'_{nom}$. Ensuite, la mise en marche de la ligne de câblage 1 se traduit par une différence relative de vitesses de rotation entre le tube 140 et le premier ensemble de pièces 46 qui provoque un déplacement avant ou arrière du second ensemble de pièces 47 actionnant le potentiomè-· tre 482. Une variation de tension est ainsi créée aux bornes 483 du potentiomètre et commande le moteur correcteur 43 par l'intermédiaire des secondes entrées de commande électrique 431, ce qui égalise les vitesses de rotation de l'ensemble 46 et du tube 140. A ce stade, le galet 464 se trouve à une certaine position entre les extrémités de la surface spiralée 475 de la came 474. On cherche ensuite à amener le galet 464 à une position médiane entre les extrémités de la surface spiralée 475 de la came 474 pour pouvoir profiter d'une plage de variation de vitesse commandée par l'asservissement ayant la même étendue dans le sens d'une augmentation de vitesse que dans le sens d'une diminution de vitesse. Pour ce faire, on effectue un réglage manuel du potentiomètre 44 qui modifie la vitesse de rotation du moteur correcteur 43 par l'intermédiaire de la première entrée de commande électrique 430. Cela a pour effet de changer la vitesse de rotation de l'ensemble 47 et, par suite, de décaler angulairement l'ensemble 47 par rapport à l'ensemble 46. Le déclage angulaire est capté par la tige 480 qui commande par l'intermédiaire du potentiomètre 482 le retour du moteur correcteur 43 à sa vitesse précédant l'intervention manuelle. En résumé, pour modifier la position angulaire de l'ensemble 47 par rapport à l'ensemble 46, il faut modifier la position du potentiomètre 44.

En cours de câblage, si le pas des rainures varie de $\pm \Delta p$, la vitesse de rotation $\Omega'$ du premier ensemble 46 varie de $\pm \Delta\Omega'$ et la came 474 est translatée vers l'avant ou l'arrière, ce qui se traduit par une variation $\Delta V$ de la tension de commande du moteur correcteur 43. La variation de vitesse du moteur 43 est transformée en une variation de vitesse de l'arbre menée 422 du différentiel 42 dans les mêmes proportions, ce qui égalise de nouveau les vitesses $\Omega$ et $\Omega'$.

**Revendications**

1. Installation pour la pose de fibres optiques (3) dans des rainures hélicoïdales (21) d'un jonc (2) entraîné en translation à vitesse constante (v) le long d'un axe de défilement (X'X), ladite installation comprenant :
— des moyens d'alimentation en fibres optiques (140, 143, 144) montés tournants autour de l'axe de défilement (X'X) du jonc (2) ;
— des moyens de distribution de fibres optiques (145, 146) montés tournants autour dudit axe de défilement (X'X), en aval desdits moyens d'alimentation, les fibres (3) fournies par les moyens d'alimentation étant introduites dans les rainures du jonc à travers lesdits moyens de distribution ;
— des premiers moyens moteur (40) pour entraîner en translation à vitesse constante (v) le jonc rainuré (2) ;
— des seconds moyens moteurs (41, 42) pour entraîner en rotation lesdits moyens d'alimentation en fibres optiques (140, 143, 144), et
— un système (43, 44, 45) pour asservir la vitesse de rotation ($\Omega$) desdits moyens d'alimentation en fibres optiques à la vitesse de rotation apparente ($\Omega'$) des rainures du jonc entraîné en translation à vitesse constante (v), ledit système d'asservissement comprenant des moyens de détection (45) couplés mécaniquement pour partie (46) au jonc (2) et pour partie (47) aux moyens d'alimentation (140, 143, 144) pour détecter continûment la différence ($\Delta\Omega$) entre ladite vitesse de rotation ($\Omega$) desdits moyens d'alimentation en fibres optiques et ladite vitesse de rotation apparente ($\Omega'$) des rainures du jonc afin de convertir ladite différence ($\Delta\Omega$) en une variation de tension ($\Delta V$), et des moyens de commande (43, 44) couplés électriquement auxdits moyens de détection (45) pour commander lesdits seconds moyens moteurs (41, 42) en fonction de ladite variation de tension ($\Delta V$) de façon à assurer ledit asservissement,
ladite installation étant caractérisée en ce que :
— les moyens de distribution (145, 146) des fibres optiques sont liés rigidement auxdits moyens d'alimentation en fibres optiques (140, 143, 144), de sorte que lesdits seconds moyens moteurs (41, 42) entraînent en rotation l'ensemble (14) des moyens d'alimentation et de distribution ;
— lesdits seconds moyens moteurs (41, 42) sont liés mécaniquement auxdits premiers moyens moteurs (40), lesdits seconds moyens moteurs comprenant un différentiel (42) qui comporte, respectivement, un arbre moteur (420) couplé mécaniquement par l'intermédiaire d'une boîte de vitesses (41) auxdits premiers moyens moteurs (40), un arbre mené (422) couplé mécaniquement audit ensemble (14) des moyens d'alimentation et de distribution, et un arbre de commande (421), et

— lesdits moyens de commande (43, 44) du système d'asservissement comprennent un moteur correcteur à courant continu et à vitesse variable (43) sensible à ladite variation de tension (ΔV) élaborée par lesdits moyens de détection (45), ledit moteur correcteur étant couplé mécaniquement audit arbre de commande (421) dudit différentiel (42) de façon que lesdits moyens d'alimentation et de distribution en fibres optiques (14) soient entraînés à une vitesse de rotation (Ω) proportionnelle à une vitesse de rotation imposée par les premiers moyens moteurs (40) et corrigée continûment par ladite différence de vitesse détectée (ΔΩ).

2. Installation conforme à la revendication 1, caractérisée en ce que les moyens de commande (43, 44) du système d'asservissement comprennent des moyens (44), tels qu'un potentiomètre, reliés à une sortie tachymétrique (401) des premiers moyens moteurs (40) pour régler la vitesse de rotation du moteur correcteur (43) afin que les moyens d'alimentation et de distribution en fibres optiques (14) tournent à une vitesse de rotation (Ω) comprise entre deux rapports de la boîte de vitesses (41), à des rapports de vitesse d'engrenages intermédiaires près, pour un pas nominal de rainure (21) du jonc (2).

3. Installation conforme à la revendication 1 ou 2 caractérisée en ce que les moyens de détection (45) comprennent des moyens (46) stationnaires en translation et entraînés en rotation par les rainures (21) du jonc (2), des moyens (47) liés en rotation aux moyens d'alimentation en fibres optiques (140, 143, 144) et translatables parallèlement au jonc (2) par lesdits moyens (46) entraînés en rotation par les rainures, et des moyens électromécaniques (48) pour détecter la translation des moyens translatables (47) afin de produire ladite variation de tension (ΔV), et de préférence des moyens (484) pour mesurer ladite variation de tension.

4. Installation conforme à la revendication 3, caractérisée en ce que les moyens (46) entraînés en rotation par les rainures et les moyens translatables (47) comprennent respectivement un galet ou analogue (464) décrivant un cercle coaxial au jonc (2), et une came (474) ayant une surface active (475) inclinée par rapport au jonc (2) et appliquée en permanence contre le galet (464) par des moyens élastiques (476) inclus dans les moyens d'alimentation en fibres optiques (140, 143, 144).

5. Installation conforme à la revendication 4, caractérisée en ce que la surface active (475) de la came (474) est sous la forme d'une spire d'hélice coaxiale au jonc (2).

6. Installation conforme à l'une quelconque des revendications 3 à 5, caractérisée en ce que les moyens (46) entraînés en rotation par les rainures et les moyens translatables (47) comprennent respectivement un fourreau (460) entourant librement le jonc (2) et guidé en rotation à l'intérieur d'un tube (140) inclus dans les moyens d'alimentation en fibres optiques par des roulements à billes ou analogues (461), et un manchon (470) entourant le fourreau (460) et guidé en translation à l'intérieur dudit tube (140) par des douilles à billes ou analogues (471).

7. Installtion conforme à l'une quelconque des revendications 3 à 6, caractérisée en ce que les moyens (46) entraînés en rotation comprennent au moins un doigt (465), de préférence rétractable, engagé dans une rainure (21) du jonc (2).

8. Installation conforme à l'une quelconque des revendications 3 à 7, caractérisée en ce que lesdits moyens électromécaniques (48) comprennent des moyens de division de tension (482), tels qu'un potentiomètre, portés entre deux tensions opposées (+ V, — V) et ajustables par les moyens translatables (47).

9. Installation conforme à l'une quelconque des revendications 1 à 8, caractérisés en ce que les moyens pour détecter (45) et les moyens de distribution de fibres optiques (145, 146) sont disposés respectivement à des extrémités amont et aval d'un tube (140) coaxial au jonc (2) par rapport à la direction de translation du jonc, ledit tube supportant lesdits moyens d'alimentation en fibres optiques.

10. Installation conforme à l'une quelconque des revendications 1 à 9, caractérisée en ce que les premiers moyens moteurs (40) sont couplés mécaniquement à des moyens (15) pour enrubanner le jonc (2) contenant les fibres optiques (3).

**Claims**

1. Installation for the laying of optical fibers (3) into helical grooves (21) of a ring (2) translationally driven at constant speed (v) along an advancing axis (X'X), said installation comprising :

— optical fibers feeding means (140, 143, 144) rotably mounted about the advancing axis (X'X) of the ring (2) ;

— optical fiber dispensing means (145, 146) rotably mounted about said advancing axis (X'X), downstream of said feeding means, the fibers (3) fed from the feeding means being inserted into the ring grooves through said dispensing means ;

— first motor means (40) for translationally driving the grooved ring (2) at constant speed (v) ;

— second motor means (41, 42) for rotationally driving said optical fiber feeding means (140, 143, 144), and

— a system (43, 44, 45) for slaving the rotational speed (Ω) of said optical fiber feeding means to the apparent rotational speed (Ω') of the grooves of the ring translationally driven at constant speed (v), said slaving system comprising detection means (45) mechanically coupled partly (46) to the ring (2) and partly (47) to the feeding means (140, 143, 144) for continuously detecting

the difference ($\Delta\Omega$) between said rotational speed ($\Omega$) of said optical fiber feeding means and said apparent rotational speed ($\Omega'$) of the ring grooves thereby converting the difference ($\Delta\Omega$) into a voltage variation ($\Delta V$), and control means (43, 44) electrically coupled to said detecting means (45) for controlling said second motor means (41, 42) in terms of said voltage variation ($\Delta V$) thereby ensuring said slaving,

said installation being characterized in that :

— the optical fiber dispensing means (145, 146) are rigidly linked to said optical fiber feeding means (140, 143, 144), whereby said second motor means (41, 42) rotationally drive the assembly (14) of the feeding and dispensing means ;

— said second motor means (41, 42) are mechanically linked to said first motor means (40), said second motor means comprising a differential (42) that carries, respectively, a motor shaft (420) mechanically coupled to said first motor means (40) by means of a gearbox (41), a follower shaft (422) mechanically coupled to said assembly (14) of the feeding and dispensing means and a control shaft (421), and

— said control means (43, 44) in the slaving system comprise a direct-current and variable speed corrector motor (43) sensitive to said voltage variation ($\Delta V$) derived by said detection means (45), said corrector motor being coupled mechanically to said control shaft (421) of said differential (42) whereby said optical fiber feeding and dispensing means (14) are driven at a rotational speed ($\Omega$) proportional to a rotational speed imposed by said first motor means (40) and continuously corrected by said detected speed difference ($\Delta\Omega$).

2. Installation according to claim 1, characterized in that the control means (43, 44) of the slaving system comprises means (44), such as a potentiometer, connected to a tachometric ouput (401) of the first motor means (40) for adjusting the rotational speed of the corrector motor (43) such that the optical fiber feeding and dispensing means (14) turn at a rotational speed ($\Omega$) lying between two gear ratios of the gearbox (41), within the limits of intermediate meshing ratios, for a nominal groove (21) pitch of the ring (2).

3. Installation according to claim 1 or 2, characterized in that the detection means (45) comprise means (46) translationally stationary and rotationally driven by the grooves (21) of the ring (2), means (47) rotationally linked to the optical fiber feeding means (140, 143, 144) and translatable parallel to the ring (2) by said means (46) rotationally driven by the grooves, and electromechanical means (48) for detecting the translation of the translatable means (47) thereby deriving said voltage variation ($\Delta V$), and preferably means (484) for measuring said voltage variation.

4. Installation according to claim 3, characterized in that the means (46) rotationally driven by the grooves and the translatable means comprise respectively a roller or the like (464) describing a circle coaxial with the ring (2) and a cam (474) having an active surface (475) inclined with

respect to the ring (2) and permanently applied against the roller (464) by spring means (476) included in the optical fiber feeding means (140, 143, 144).

5. Installation according to claim 4, characterized in that the active surface (475) of the cam (474) is shaped as a helical spiral coaxial with the ring (2).

6. Installation according to any one of claims 3 to 5, characterized in that means (46) rottionally driven by the grooves and the translatable means (47) comprises respectively a sheath (460) freely surrounding the ring (2) and guided rotationally inside a tube (140) included in the optical fiber feeding means by ball-bearings or the likes (461), and a sleeve (470) surrounding the sheath (460) and guided translationally inside the tube (140) by ball-bearing bushes or the likes (471).

7. Installation according to any one of claims 3 to 6, characterized in that the rotationally driven means (46) comprise at least one finger (465), preferably withdrawable, engaged in a groove (21) of the ring (2).

8. Installation according to any one of claims 3 to 7, characterized in that said electromechanical means (48) comprise voltage dividing means (482) such as a potentiometer, raised between two opposite voltages ($+ V$, $— V$) and ajustable by the translatable means (47).

9. Installation according to any one of claims 1 to 8, characterized in that the detection means (45) and the optical fiber dispensing means (145, 146) are arranged respectively at upstream and downstream ends of a tube (140) coaxial with the ring (2) with respect to the ring translation direction, said tube carrying said optical fiber feeding means.

10. Installation according to any one of claims 1 to 9, characterized in that the first motor means (40) are coupled mechanically to means (15) for taping the ring (2) containing the optical fibers (3).

## Patentansprüche

1. Einrichtung zum Einlegen von optischen Fasern (3) in Spiralnuten (21) eines in Translation mit konstanter Geschwindigkeit (v) längs einer Ablaufachse (X'X) mitgenommenen Stange (2), wobei die Einrichtung umfaßt :

— um die Ablaufachse (X'X) der Stange (2) drehend angebrachte Mittel zur Zuführung von optischen Fasern (140, 143, 144) ;

— stromabwärts der Zuführungsmittel drehend um die Ablaufachse (X'X) angebrachte Mittel zum Verteilen optischer Fasern (145, 146) wobei die durch die Zuführungsmittel gelieferten Fasern (3) durch die Verteilungsmittel in die Nuten der Stange eingeführt werden ;

— erste Antriebsmittel (40) zum Mitnehmen der genuteten Stange (2) in Translation mit konstanter Geschwindigkeit (v) ;

— zweite Antriebsmittel (41, 42) zum Mitnehmen der Mittel zur Zuführung optischer Fasern (140, 143, 144) in Rotation und

— ein System (43, 44, 45) zum Steuern der Rotationsgeschwindigkeit (Ω) der Mittel zum Zuführen optischer Fasern mit scheinbarer Rotationsgeschwindigkeit (Ω') der Nuten der in Translation mit konstanter Geschwindigkeit (v) mitgeführten Stange, wobei das Steuerungssystem mechanisch gekoppelte Erfassungsmittel (45) für Teil (46) mit der Stange (2) und für Teil (47) mit den Zuführungsmitteln (140, 143, 144) zur fortgesetzten Erfassung der Differenz (ΔΩ) zwischen der Rotationsgeschwindigkeit (Ω) der Mittel zur Zuführung optischer Fasern und der scheinbaren Rotationsgeschwindigkeit (Ω') der Nuten der Stange zur Verarbeitung der Differenz (ΔΩ) in eine Spannungsänderung (ΔV) und elektrisch mit den Erfassungsmitteln (45) gekoppelte Betätigungsmittel (43, 44) zum Betätigen der zweiten Antriebsmittel (41, 42) in Abhängigkeit von der Spannungsänderung (ΔV) umfaßt derart, daß die Steuerung sichergestellt wird,

wobei die Einrichtung dadurch gekennzeichnet ist, daß :

— die Mittel (145, 146) zum Verteilen der optischen Fasern starr mit den Mitteln zur Zuführung optischer Fasern (140, 143, 144) verbunden sind derart, daß die zweiten Antriebsmittel (41, 42) den Aufbau (14) der Zuführungs- und Verteilungsmittel in Drehung mitführen ;

— die zweiten Antriebsmittel (41, 42) mechanisch mit den ersten Antriebsmitteln (40) verbunben sind, wobei die zweiten Antriebsmittel ein Augleichsgetriebe (42) aufweisen, das jeweils eine mittels eines Getriebes (41) mit den ersten Antriebsmitteln (40) mechanisch gekoppelte Antriebswelle (420), eine mit dem Aufbau (14) der Zuführungs- und Verteilungsmittel mechanisch gekoppelte Abtriebswelle (422) und eine Betätigungswelle (421) umfaßt und

— die Betätigungsmittel (43, 44) des Steuerungssystems einen Ausgleichsantrieb mit Gleichstrom und mit variabler Drehzahl (43), empfindlich auf die durch die Erfassungsmittel (45) hegestellte Spannungsänderung (ΔV) aufweisen, wobei der Ausgleichsantrieb mechanisch mit der Betätigungswelle (421) des Ausgleichsgetriebes (42) derart gekoppelt ist, daß die Mittel (14) zur Zuführung und zur Verteilung optischer Fasern mit einer Rotationsgeschwindigkeit (Ω) proportional zu einer durch die ersten Antriebsmittel (40) aufgedrückten und fortgesetzt durch die Differenz der erfaßten Drehzahl (Ω) korrigierten Rotationsgeschwindigkeit mitgeführt werden.

2. Einrichtung nach Anspruch 1, dadurch gekennzeichnet, daß die Betätigungsmittel (43, 44) des Steuerungssystems Mittel (44), wie ein Potentiometer, aufweisen, die mit einem Drehzahlmesserausgang (401) der ersten Antriebsmittel (40) zum Regeln der Rotationsgeschwindigkeit des Ausgleichsantriebs (43) verbunden sind, damit sich die Mittel zur Zuführung und zur Verteilung optischer Fasern (14) miteiner Rotationsgeschwindigkeit (Ω) drehen, die zwischen zwei Gängen des Getriebes (41) enthalten ist, mit dazwischen liegenden Getriebegängen in der Nähe, für eine Nominalteilung der Nut (21) der Stange (2).

3. Einrichtung nach Anspruch 1 oder 2, dadurch gekennzeichnet, daß die Erfassungsmittel (45) in Translation stationäre und in Rotation durch die Nuten (21) der Stange (2) mitgeführte Mittel (46), in Rotation mit den Mitteln zur Zuführung optischer Fasern (140, 143, 144) verbundene und parallel zur Stange (2) durch die in Rotation durch die Nuten mitgeführten Mittel (46) verschiebbare Mittel (47) und elektromechanische Mittel (48) zur Erfassung der Translation der verschiebbaren Mittel (47) zum Erzeugen der Spannungsänderung (ΔV) und vorzugsweise Mittel (484) aufweisen, um die Spannungsänderung zu messen.

4. Einrichtung nach Anspruch 3, dadurch gekennzeichnet, daß die in Rotation durch die Nuten mitgeführten Mittel (46) und die verschiebbaren Mittel (47) jeweils eine Walze oder analog (464), beschreibend einen Kreisbogen koaxial zur Stange (2), und eine Nockenscheibe (474) aufweisen, die eine in bezug auf die Stange (2) geneigte und gegen die Walze (464) durch in den Mitteln zur Zuführung von optischen Fasern (140, 143, 144) eingeschlossene elastische Mittel (476) permanent gegen die Walze (464) aufgedrückte aktive Oberfläche (475) besitzt.

5. Einrichtung nach Anspruch 4, dadurch gekennzeichnet, daß die aktive Oberfläche (475) der Nockenscheibe (474) in der Form einer zur Stange (2) koaxialen Schraubenwindung ist.

6. Einrichtung nach einem beliebigen der Ansprüche 3 bis 5, dadurch gekennzeichnet, daß die in Rotation durch die Nuten mitgeführten Mittel (46) und die verschiebbaren Mittel (47) jeweils eine die Stange (2) frei umgebende und in Rotation im Inneren eines in den Mitteln zur Zuführung optischer Fasern durch Kugel- oder analoge Lager (461) enthaltenen Rohr (140) geführte Hülse (460) und ein die Hülse (460) umgebendes und in Translation im Inneren des Rohrs (140) durch Kugelhülsen oder analoge (471) geführtes Muffenstück (470) aufweisen.

7. Einrichtung nach einem beliebigen der Ansprüche 3 bis 6, dadurch gekennzeichnet, daß die in Rotation mitgeführten Mittel (46) wenigstens einen vorzugsweise zurückziehbaren, in eine Nut (21) der Stange (2) eingerückten Zapfen (465) aufweisen.

8. Einrichtung nach einem beliebigen der Ansprüche 3 bis 6, dadurch gekennzeichnet, daß die elektromechanischen Mittel (48) Spannungsteilmittel (482) wie ein Potentiometer aufweisen, die zwichen zwei entgegengesetzten Spannungen (+V, —V) geführt und durch die verschiebbaren Mittel (47) einstellbar sind.

9. Einrichtung nach einem beliebigen der Ansprüche 1 bis 8, dadurch gekennzeichnet, daß die Erfassungsmittel (45) und die Mittel zum Verteilen optischer Fasern (145, 146) jeweils an stromaufwärtigen und stromabwärtigen Enden eines zur Stange (2) koaxialen Rohrs (140) in bezug auf die Translationsrichtung der Stange angeordnet sind, wobei das Rohr die Mittel zur Zuführung optischer Fasern unterstützt.

10. Einrichtung nach einem beliebigen der Ansprüche 1 bis 9, dadurch gekennzeichnet, daß die ersten Antriebsmittel (40) mechanisch mit Mitteln (15) zum Umwickeln der die optischen Fasern (3) enthaltenden Stange (2) gekoppelt sind.

FIG.1

FIG.2

FIG.3

45(FIG.5)
4
47
46
48
483
141
142
147
143
140
14
3
2
X'                                                                X
146
145
144
484
-V    +V
44
401
42
420
421
422
40
411
41~
412
402
Vers 15,16
431
432
430
43

0 168 278

# FIG.4

ROUE DE TIRAGE

_14_

_143_

_144_

_3_

_145_

_16_

_15_

RUBANEUSE

_45_

DETECTION

_46_ _47_

_482_

_140_

_483_

_422_

_420_

_412_

_42_ DIFFERENTIEL

BOITE DE VITESSES _41_

_421_

_43_ _432_

MOTEUR CORRECTEUR

_402_

_40_ MOTEUR PRINCIPAL

_401_

_431_

$\pm\Delta\theta$ | $\pm\Delta V$ | $K\in[-1,1]$

COMMANDE _430_

_44_

_484_ $-V$ $+V$

0 168 278

# FIG.5

0 168 278